# EUROPÄISCHE PATENTSCHRIFT

(11) **EP 0 838 061 B1**
(45) Veröffentlichungstag und Bekanntmachung des Hinweises auf die Patenterteilung: **19.09.2001**
(21) Anmeldenummer: 96921878.3
(22) Anmeldetag: 01.07.1996
(51) Int. Cl.: G06F 17/60, G06F 17/30

(54) **VERFAHREN ZUM ARCHIVIEREN VON DOKUMENTEN**
DOCUMENT-ARCHIVING METHOD
PROCEDE D'ARCHIVAGE DE DOCUMENTS

(30) Priorität: 04.07.1995 DE 19524398
(43) Veröffentlichungstag der Anmeldung: 29.04.1998
(73) Patentinhaber: Gubo, Adalbert, 55118 Mainz (DE)
(72) Erfinder: Gubo, Adalbert, 55118 Mainz (DE)
(74) Vertreter: Holtfoth, Hans-Jürgen
(86) Internationale Anmeldenummer: DE9601172
(87) Internationale Veröffentlichungsnummer: WO9702536

(56) Entgegenhaltungen:
- EP-A- 0 273 435
- US-A- 4 991 200
- US-A- 5 075 875
- US-A- 5 131 077
- US-A- 5 241 466

## Beschreibung

Es ist bekannt, daß die Kopie eines Schriftstückes oder einer Zeichnung durch Ablichtung erstellt wird. Die dabei zum Einsatz kommenden Verfahren sind hauptsächlich :
a) Verfilmung, z.B. Mikrofilm
b) gerasterte elektronische Kopie durch Kopierer oder Scanner, beispielsweise gemäß JP 2-246469 (A).

Die vom Scanner erzeugte elektronische Kopie wird in einem Speicher abgelegt, um für wiederholte Ausdrucke zur Verfügung zu stehen.

Das Benutzerhandbuch für Arbeitsplatz-Systeme 5815, 5820, 5822, Siemens AG 1986, Ordner 1, Seite 4-20 und Ordner 2, Seite 10-17 zeigt die Speicherung eines Dokumentes im Druckdatenformat.

Demgegenüber liegt der Erfindung die Aufgabe zugrunde, ein Dokument ohne erneute Erfassung zu archivieren.

Beiden Verfahren liegt das Erfassen des Originals durch mechanische Vorbeiführung an einem optischen Linsensystem zugrunde. Die daraus resultierenden Einschränkungen betreffen einmal die mangelnde Geschwindigkeit derartiger Systeme und zum anderen die mögliche Verfälschung durch Verschmutzung oder Beschädigung des Linsensystems.

Die Erfindung mit den im Patentanspruch angegebenen Merkmalen beseitigt diese Nachteile und erreicht, daß in einem Arbeitsgang die ansonsten niedrige Erfassungsgeschwindigkeit des Originals auf die hohe Geschwindigkeit des Druckers angehoben wird und Verfälschungen durch verschmutzte Optik und/oder manuelle Eingriffe, z.B. in Form von Vertauschungen, vermieden werden.

Die mit der Erfindung erzielten Vorteile bestehen insbesondere darin, zur Archivierung und Beweisführung immer eine identische Kopie im Rasterformat des jeweiligen Schriftstückes zu erzeugen, ohne das gedruckte Original einer nachträglichen Behandlung, z.B. durch Scanner oder Mikroverfilmung, zu unterziehen. Diese identische Kopie kann dann wieder zur Erzeugung eines Druckbildes, welches mit dem Original identisch ist, verwendet werden.

Weder bei dem Erfassungsvorgang noch bei dem Druckvorgang wird der Drucker in seiner Geschwindigkeit beeinträchtigt.

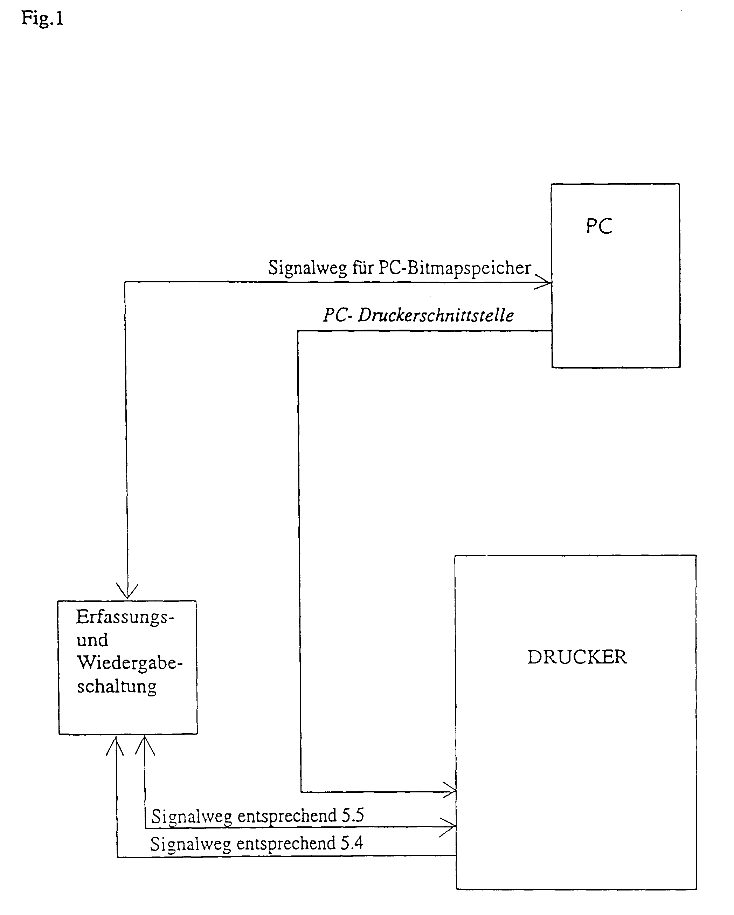

Ein Ausführungsbeispiel für einen Delphax(R) lonenstrahldrucker mit einer Geschwindigkeit von bis zu 150 DIN A4 Seiten pro Minute ist in Fig. 1 der Zeichnung dargestellt und wird nachstehend beschrieben:

Der als "Signalweg entsprechend 5.4" bezeichnete Anschluß transportiert die gerasterten Bitmap-Daten vom Drucker in die Erfassungs- und Wiedergabeschaltung.

Dort werden die Daten während des Druckes dupliziert und - mit den Formatinformationen für den gegenwärtigen Druck versehen - zu einer Schaltung im PC gesendet und gespeichert. Das geschieht über den als "Signalweg für PC-Bitmapspeicher" bezeichneten Anschluß.

Über den als "Signalweg entsprechend 5.5" bezeichneten Anschluß gelangen die gerasterten Bitmap-Daten wieder zurück zum Drucken in den Drucker.

Sollen die auf dem PC gespeicherten gerasterten Bitmap-Daten wieder gedruckt werden, so geschieht das auf umgekehrte Weise.

Über den als "Signalweg für PC-Bitmapspeicher" bezeichneten Anschluß gelangen die gerasterten Bitmap-Daten zur Erfassungs- und Wiedergabeschaltung und werden von dort über den als "Signalweg entsprechend 5.5" bezeichneten Anschluß dem Drucker übergeben.

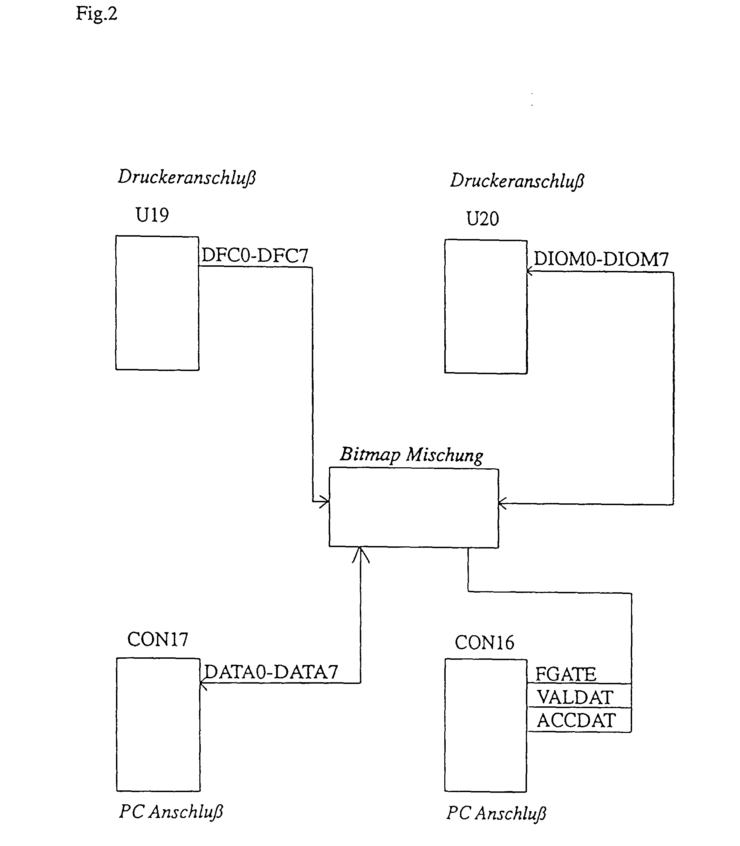

Signalbeschreibung der Erfassungs- und Wiedergabeschaltung gemäß Fig.2:

Für die Erfassung und Wiedergabe des Druckbildes sind die Signale an folgenden Anschlüssen maßgebend:

| | | | |
|---|---|---|---|
| 5.1 Signalname FGATE | Pin 4 | Steckverbinder CON16 | Verwendungszweck Haupttakt zur Steuerung des Gesamtablaufes |
| | | | |
| 5.2 Signalname DATA0-DATA7 | Pin alle geraden Pins | Steckverbinder CON16 | Verwendungszweck Bidirektionaler Datenbus mit der Farbinformation für die Rasterpunkte. |
| | | | |
| 5.3 Signalname VALDAT | Pin 6 | Steckverbinder CON16 | Verwendungszweck Handshake-Signal für den Datenverkehr aus dem Drucker heraus. |
| ACCDAT | 8 | CON16 | Handshake-Signal für den Datenverkehr in den Drucker hinein. |
| | | | |
| 5.4 Signalname DFC0-DCF7 - | Pin 1-8 | Steckverbinder U19 | Verwendungszweck Unidirektionales vom Raster Image Prozessor des Druckers kommendes Datensignal mit der Farbinformation für die Rasterpunkte. |
| | | | |
| 5.5 Signalname DIOM0-DIOM7 | Pin 1-8 | Steckverbinder U20 | Verwendungszweck Logische Verknüpfung der Datensignale aus 5.2 und 5.4 |

Über die Anschlüsse CON16 und CON17 wird der PC an die Erfassungs- und Wiedergabeschaltung angeschlossen. Diese Verbindung wird als "Signalweg für PC-Bitmapspeicher" bezeichnet.

Über die Anschlüsse U19 und U20 wird der Drucker an die Erfassungs- und Wiedergabeschaltung angeschlossen.
Die Verbindung U19 zum Drucker wird als "Signalweg entsprechend 5.4" bezeichnet.
Die VerbindungU 20 zum Drucker wird als "Signalweg entsprechend 5.5" bezeichnet.

## Patentansprüche

1. Verfahren zum Archivieren von Dokumenten,
**dadurch gekennzeichnet, daß**
eine Erfassungs- und Wiedergabeschaltung mittels den zuletzt das Druckbild erzeugenden Ausgangssignalen eines in Gang gesetzten Druckers den Speicher eines Personal Computers ansteuert und dort ein binäres identisches Abbild des zu druckenden Dokuments ablegt,
welches Abbild zur dauerhaften Speicherung auf einen nicht wieder löschbaren Datenträger (z.B. CD-ROM) geschrieben wird.

2. Verfahren nach Anspruch 1,
**dadurch gekennzeichnet, daß**
zu Kopierungszwecken der Drucker -auf demselben Datenweg zurückgehend- zu einem erneuten Ausdruck veranlaßt wird.

3. Verfahren nach Anspruch 1,
**dadurch gekennzeichnet, daß** das archivierte binäre identische Abbild zur Sichtbarmachung auf dem Bildschirm des Personal Computers dargestellt wird.

## Claims

1. Process for the archiving of documents, including the steps of:
- causing a capturing and reproduction circuit to select the memory of a personal computer by means of the printing image creating output signals of a printer which has been started up;
- depositing in the memory a binary identical copy of the document to be printed; and
- writing said binary identical copy onto a non-erasable data carrier (e.g. CD-ROM) for permanent storage.

2. Process according to claim 1, including the further step of causing the printer, for copying purposes, to perform a renewed print-out while it returns on the same data path.

3. Process according to claim 1, including the additional step of presenting on the screen of the personal computer, for visual display, the archived binary identical copy.

## Revendications

1. Procédé pour la conservation de documents dans une archive,
**caractérisé en ce que**
- un circuit d'aquisition et de reproduction excite - moyennant les derniers signaux de sortie d'une imprimante mise en marche ayant produit l'image d'impression - la mémoire d'un ordinateur personnel pour y déposer une image binaire identique du document devant être imprimé,
- ladite image étant écrite - en vue d'une mémorisation durable - sur un porteur des données ne pouvant plus être effacé (p.ex. CD-Rom).

2. Procédé selon la revendication 1,
**caractérisé en ce que**
l'imprimante est demandée - par un retour sur la même voie de . données - de réaliser une nouvelle impression pour obtenir une copie.

3. Procédé selon la revendication 1,
**caractérisé en ce que**
l'image binaire identique mémorisée est représentée pour des fins de visualisation sur l'écran de l'ordinateur personnel.
